# FASCICULE DE BREVET EUROPEEN

(11) **EP 0 433 187 B1**
(45) Date de publication et mention de la délivrance du brevet: **30.08.1995**
(21) Numéro de dépôt: 90420531.7
(22) Date de dépôt: 10.12.1990
(51) Int. Cl.: B23B 31/12

(54) **Mandrin porte-outil pour l'équipement d'une machine tournante telle qu'une perceuse**
Werkzeugspannfutter zur Ausrüstung einer drehenden Maschine, insbesondere einer Bohrmaschine
Tool chuck for equipment of a rotating machine like a drilling machine

(30) Priorité: 11.12.1989 FR 8917200
(43) Date de publication de la demande: 19.06.1991
(73) Titulaire: ETABLISSEMENTS AMYOT S.A., F-25300 Pontarlier (FR)
(72) Inventeur: Amyot, Claude Virgile Louis, F-25300 Doubs (FR)
(74) Mandataire: Maureau, Philippe

(56) Documents cités:
- EP-A- 0 043 785
- DE-A- 3 600 641
- DE-B- 1 192 908
- FR-A- 2 606 691
- US-A- 3 807 745

## Description

La présente invention a pour objet un mandrin porte-outil pour l'équipement d'une machine tournante telle qu'une perceuse, ou une machine de vissage-dévissage, comprenant les caractéristiques du préambule de la revendication 1 (voir EP-A-0 300 375).

Les mandrins sont le plus souvent utilisés pour réaliser la fixation vis-à-vis d'un arbre moteur, soit d'une mèche de forage ou foret, soit un embout de tourne-vis. Une première possibilité pour réaliser la fixation de la queue cylindrique d'un outil sur le mandrin consiste à équiper celui-ci d'un système à crémaillère, assurant à l'aide d'une clé le serrage des mors sur l'outil, avant utilisation de la machine. La crémaillère assure l'entraînement en rotation par rapport au corps d'une chemise entourant celui-ci, sur la face intérieure de laquelle est fixé un écrou, dont le filetage interne coopère avec le filetage externe des mors. Si cette solution donne satisfaction d'un point de vue pratique, elle présente l'inconvénient de nécessiter l'utilisation d'une clé qui est souvent égarée par l'utilisateur. Cette utilisation d'une clé est d'autant plus contraignante dans les perceuses dites sans fil, c'est-à-dire qui sont alimentées à partir de batteries faisant partie intégrante du corps de la machine, ce qui leur donne une mobilité très importante. Ces machines ou perceuses sans fil sont généralement équipées de mandrins à clé pour la tenue des outils. Ce type de mandrin permet l'utilisation dans les deux sens de rotation, et le passage d'une vis axiale pour le blocage du mandrin sur la broche de la perceuse lorsque le sens de rotation de l'arbre moteur tend à favoriser le desserrage du mandrin vis-à-vis de celui-ci. Il existe des mandrins permettant un serrage satisfaisant de l'outil sans nécessiter la mise en oeuvre d'une clé.

Une première solution connue consiste à ménager, à l'extrémité arrière de la chemise d'entraînement en rotation de l'écrou d'actionnement des mors, plusieurs dents, une bague montée concentriquement sur le corps étant maintenue axialement écartée de la chemise sous l'action d'un ressort comportant au moins une dent en vis-à-vis de la chemise. Cette bague est montée libre en rotation autour du corps. En pratique pour réaliser le serrage ou le desserrage de l'outil, il convient que l'utilisateur saisisse la bague et la déplace vers l'avant, pour que les dents de celle-ci viennent en prise avec les dents de la chemise, en même temps qu'il commande la mise en rotation du corps du mandrin, à partir de l'arbre-moteur, dans un sens ou dans l'autre. Il se produit un mouvement relatif en rotation des dents antagonistes de la bague et de la chemise provoquant une série de chocs favorisant le serrage ou le desserrage des mors, selon le sens de rotation envisagé.

Dans un autre mandrin connu, la chemise présente, à son extrémité avant, une partie en forme de collerette radiale de laquelle font saillie plusieurs crans tournés vers l'arrière. D'autre part, sur l'écrou d'actionnement des mors est emmanché à force une bague comportant des crans tournés vers l'avant, et destinés à venir en prise avec les crans que comporte la chemise.

Un ressort prenant appui sur le corps du mandrin maintient en prise les crans respectivement de la bague et de la chemise tant qu'un certain effort n'est pas atteint.

En pratique, il suffit à l'utilisateur, pour réaliser le serrage ou le desserrage des mors d'assurer manuellement un blocage en rotation de la chemise et d'actionner l'arbre-moteur dans un sens ou dans l'autre. Il en résulte une série de chocs exercés par les crans de la bague contre les crans de la chemise, favorisant le serrage ou le desserrage, selon les cas.

Toutefois ces deux mandrins connus possédent une structure complexe qui conduit à un prix de revient élevé et à un encombrement très important.

Une autre solution est fournie dans le document EP-A-0 300 375 qui concerne un mandrin utilisant un pas très fin pour les mors, et une série de billes disposée entre l'écrou et le corps, cette dernière caractéristique à savoir interposition de billes entre l'écrou et le corps étant déjà connu dans les mandrins industriels. Le mandrin décrit dans ce document présente l'inconvénient de ne pas posséder de parfaites caractéristiques d'indesserrabilité, et d'être très fastidieux à manoeuvrer tant pour le serrage que pour le desserrrage, compte tenu de la finesse du pas, et enfin de nécessiter un grand diamètre extérieur du mandrin pour obtenir un bon serrage.

Les mandrins comportant une butée à billles intérieure présentent l'inconvénient de ne pas pouvoir être utilisés en rotation à gauche, de ne pas permettre le passage d'une vis centrale pour le blocage du mandrin sur la broche de la machine, et de se desserrer lors de fortes vibrations durant les travaux de percussion.

La présente invention vise à remédier à ces inconvénient. A cet effet le mandrin qu'elle concerne, du type comprenant un corps fixé sur l'arbre moteur de la machine, dans lequel sont montés plusieurs mors coulissant dans des alésages et convergent vers l'avant, et une chemise entourant le corps et montée pivotante autour de celui-ci, ces mors comportant une partie extérieure filetée en prise avec un écrou entourant les mors et solidaire de la chemise entourant le corps, une série de billes étant interposée entre la face de l'écrou tourné vers l'arrière et le corps du mandrin, les billes étant en appui, du côté opposé à l'écrou, contre une bague réalisée en un matériau dur, tel qu'en acier, est caractérisé en ce que la bague servant à l'appui des billes est elle-même en appui contre une bague en matière synthétique possédant des caractéristiques d'amortissement, et bloquée contre le corps.

Les billes facilitent le serrage du mandrin jusqu'à un état de blocage satisfaisant des mors sur l'outil, sans aucune aide extérieure, tandis que la bague en matière synthétique évite tout desserrage accidentel de l'outil lors des opérations de perçage ou de percussion.

Conformément à une caractéristique d'une forme d'exécution de l'invention, la bague contre laquelle les billes prennent appui est réalisée en acier.

Conformément à une autre forme d'exécution, la bague interposée entre la bague en matériau dur, et le corps, est réalisée en un polyamide 6-6 connu sous la marque ZYTEL ST.

Selon une caractéristique avantageuse, le corps comporte un évidement périphérique servant de logement respectivement à la série de billes, à la bague réalisée en un matériau dur, et à la bague réalisée en matière synthétique, cet évidement étant ouvert vers l'extérieur, et les différents éléments qui y sont logés y étant maintenus par une chemise qui entoure le corps et qui est solidaire de celui-ci.

Outre la simplicité de réalisation de ce mandrin, cette solution permet par moletage ou rainurage de cette chemise ainsi que de la chemise solidaire de l'écrou, de favoriser la manoeuvre du mandrin par l'utilisateur.

En outre, ce mandrin comprend un fourreau orienté axialement et disposé au contact des billes, du côté de celles-ci situé radialement vers l'intérieur du corps. Ce fourreau évite tout risque de pénétration des billes dans les logements des mors.

Conformément à une caractéristique avantageuse, le pas du filetage de l'écrou et des mors, est de l'ordre de 1 à 1,50. Il s'agit d'un pas qui n'est pas trop fin, c'est-à-dire qui n'impose pas un nombre de tours trop important pour réaliser les fonctions de serrage et de desserrage d'un outil, mais qui est suffisamment faible, pour permettre facilement un serrage purement manuel.

Selon une autre forme d'exécution de ce mandrin, une bague réalisée en un matériau dur, tel qu'en acier, est interposée entre les billes et l'écrou. Cette pièce maintient les billes en place pendant les opérations d'assemblage et contribue au bon fonctionnement du mandrin du fait que son état de surface est meilleur que celui de l'écrou.

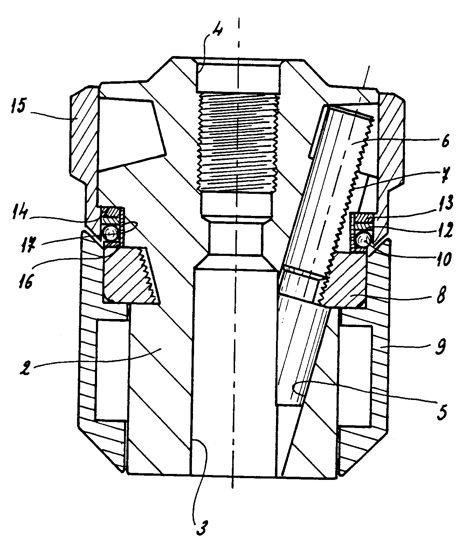

De toute façon, une forme d'exécution de l'invention sera bien comprise à l'aide de la description qui suit en référence au dessin schématique annexé dont la figure unique représente une vue en coupe longitudinale de ce mandrin.

Le mandrin représenté au dessin comprend un corps 2 présentant un perçage axial 3, à l'une des extrémités duquel est ménagé un taraudage 4 permettant la fixation sur l'arbre-moteur fileté d'une machine non représentée au dessin. Comme montré, le perçage axial 3 comporte une partie centrale rétrécie, permettant l'engagement d'une vis non représentée, destinée à assurer le blocage du mandrin sur l'arbre de la machine, pour éviter son desserrage lorsque l'arbre-moteur est entraîné dans un sens se traduisant par un desserrage automatique du mandrin.

A l'intérieur du corps sont ménagés trois alésages 5 décalés angulairement de 120° les uns par rapport aux autres, et inclinés de l'extérieur vers l'intérieur et de l'extrémité du mandrin comportant la partie taraudée 4 vers l'autre extrémité de celui-ci. Les alésages 5 débouchent d'ailleurs à cette autre extrémité pour permettre un déplacement éventuel des mors 6. Chaque mors 6 présente, dans sa partie arrière, une zone extérieure 7 filetée qui est en prise avec un écrou 8 lui-même entouré extérieurement par une chemise 9 frettée sur cet écrou.

Conformément à la caractéristique essentielle de l'invention, il est prévu entre l'écrou 8 et le corps 2 un empilement de trois types d'éléments. Il s'agit tout d'abord de billes en acier 10 prenant appui d'une part sur l'écrou 8 et d'autre part sur une bague en acier 12 parallèle à l'écrou, la bague étant elle-même en appui contre une bague en matière synthétique plaquée contre le corps 2. Cette bague 13 est avantageusement réalisée en un polyamide 6-6, de type ZYTEL ST. Il s'agit d'un matériau qui possède d'excellentes caractéristiques d'amortissement, tout en étant suffisamment dur, la notion de dureté étant importante pour permettre un bon serrage de l'outil au cours de la manoeuvre du mandrin. Les trois séries d'éléments 10, 12, et 13 sont logées à l'intérieur d'un évidement 14 ménagé dans le corps, ouvert du côté de l'écrou 8 et du côté extérieur. Pour maintenir les éléments dans cet évidement 14, une chemise 15 est fixée sur le corps 2. La chemise 15 de même que la chemise 9 présente une surface extérieure facilitant sa manipulation, par exemple un striage ou un rainurage.

Comme montré au dessin, une bague 16 en acier est interposée entre l'écrou 8 et les billes 10. En outre, un fourreau 17 est interposé entre les billes 10 et le corps 2, du côté des billes tourné radialement vers l'intérieur du corps.

Le fonctionnement de ce mandrin est le suivant :
Pour serrer un outil tel qu'un foret, l'utilisateur immobilise d'une main la chemise 15, tandis qu'il fait tourner à l'aide de l'autre main la chemise 9 qui est solidaire de l'écrou 8. Quand les mors 6 sont au contact de l'outil, le blocage du mandrin est obtenu par la force appliquée par l'utilisateur pour faire tourner la chemise 8.

Pour desserrer le mandrin, et désolidariser l'outil de celui-ci, l'utilisateur réalise la rotation de la chemise 9 en sens inverse.

Comme il ressort de ce qui précède, l'invention apporte une grande amélioration à la technique existante, en fournissant un mandrin de conception simple, qui possède d'excellentes qualités de serrage d'un outil sans nécessiter l'utilisation d'une clé, et qui ne se desserre pas en condition d'utilisation.

Comme il va de soi, l'invention ne se limite pas à la seule forme d'exécution de ce mandrin décrite ci-dessus à titre d'exemple. C'est ainsi notamment que la nature des matériaux constitutifs des bagues 12 et 13 pourrait être différente, ou encore que la structure de l'évidement 14 recevant les éléments 10,12 et 13 pourrait être différente.

## Revendications

1. Mandrin porte-outil pour l'équipement d'une machine tournante, telle qu'une perceuse, du type comprenant un corps (2) fixé sur l'arbre moteur de la machine, dans lequel sont montés plusieurs mors (6) coulissant dans des alésages et convergent vers l'avant, et une chemise (9) entourant le corps et montée pivotante autour de celui-ci, ces mors comportant une partie extérieure filetée en prise avec un écrou (8) entourant les mors et solidaire de la chemise (9) entourant le corps, une série de billes (10) étant interposée entre la face de l'écrou tournée vers l'arrière et le corps du mandrin, les billes (10) étant en appui, du côté opposé à l'écrou, contre une bague (12) réalisée en un matériau dur, tel qu'en acier, caractérisé en ce que la bague (12) servant à l'appui des billes est elle-même en appui contre une bague (13) en matière synthétique possédant des caractéristiques d'amortissement, et bloquée contre le corps.

2. Mandrin selon la revendication 1, caractérisé en ce que la bague (13) interposée entre la bague (12) en matériau dur, et le corps (2) est réalisée en un polyamide 6-6.

3. Mandrin selon l'une quelconque des revendications 1 et 2, caractérisé en ce que le corps (2) comporte un évidement périphérique (14) servant de logement respectivement à la série de billes (10), à la bague (12) réalisée en un matériau dur, et à la bague (13) réalisée en matière synthétique, cet évidement étant ouvert vers l'extérieur, et les différents éléments qui y sont logés y étant maintenus par une chemise (15) qui entoure le corps et qui est solidaire de celui-ci.

4. Mandrin selon l'une quelconque des revendications 1 à 3, caractérisé en ce que le pas du filetage de l'écrou (8) et des mors (6), est de l'ordre de 1 à 1,50.

5. Mandrin selon l'une quelconque des revendications 1 à 4, caractérisé en ce qu'une bague (16) réalisée en un matériau dur, tel qu'en acier, est interposée entre les billes (10) et l'écrou (8).

6. Mandrin selon l'une quelconque des revendications 1 à 5, caractérisé en ce qu'il comprend un fourreau (17) orienté axialement et disposé au contact des billes (10), du côté de celles-ci situé radialement vers l'intérieur du corps.

## Claims

1. Tool holding chuck for fitting to a revolving machine such as a drill, of a type consisting of a body (2) fixed on the drive shaft of the machine on which are mounted several clamping jaws (6) sliding in the bores and converging towards the front and a jacket (9) surrounding the body and pivoting around the latter, these clamping jaws including an external part with a screw thread engaging with a nut (8) surrounding the clamping jaws and solidly joined to the jacket (9) surrounding the body, a series of ball bearings (10) which are interposed between the face of the nut which is turned towards the rear and the body of the chuck with the ball-bearings (10) being supported, on the side opposite to the nut, against a collar (12) made out of a hard material such as steel, characterised in that the collar (12) which serves to support the ball-bearings is itself supported against a collar (13) made of a synthetic material with damping characteristics and locked tight against the body.

2. Chuck according to Claim 1, characterised in that the collar (13) interposed between the collar (12) made of a hard material and the body (2) is made out of a 6-6 polyamide.

3. Chuck according to one of the Claims 1 and 2, characterised in that the body (2) includes a peripheral groove (14) serving for housing respectively the series of ball-bearings (10), the collar (12) made out of a hard material and the collar (13) made out of a synthetic material, this groove opening outwards and the different elements which are housed there being held there by a jacket (15) which surrounds the body and is firmly joined to it.

4. Chuck according to one of the Claims 1 to 3, characterised in that the pitch of the thread on the nut (8) and the clamping jaws (6) is of the order of 1 to 1.50.

5. Chuck according to one of the Claims 1 to 4, characterised in that a collar (16) made out of a hard material such as steel is interposed between the ball-bearings (10) and the nut (8).

6. Chuck according to one of the Claims 1 to 5, characterised in that it includes a sleeve (17) positioned axially and arranged in contact with the ball-bearings (10) on that side of the latter which is situated radially towards the interior of the body.

## Patentansprüche

1. Werkzeugspannfutter zur Ausrüstung einer drehenden Maschine, insbesondere einer Bohrmaschine, mit einem auf einer Motorachse der Maschine befestigten Körper (2), in welchem mehrere, in Bohrungen gleitbare und nach vorne konvergierende Spannbacken (6) montiert sind, und einem den Körper umgebenden und schwenkbar um ihn herum montierten Mantel (9), wobei diese Spannbacken einen äußeren, mit einem Gewinde versehenen Teil aufweisen, der mit einer die Spannbacken umgebenden Mutter (8) im Eingriff ist und mit dem den Körper umgebenden Mantel (9) einstückig verbunden ist, einer Reihe kleiner Kugeln (10), die zwischen der nach hinten gerichteten Fläche der Mutter und dem Körper des Futters angeordnet sind, wobei die kleinen Kugeln (10) auf der der Mutter gegenüberliegenden Seite gegen einen Ring (12) aus einem harten Material, wie z.B. einem Stahl, anliegen, dadurch gekennzeichnet, daß der als Auflage der kleinen Kugeln dienende Ring (12) seinerseits gegen einen Ring (13) aus synthetischem Material anliegt, der Dämpfungseigenschaften besitzt und an dem Körper feststehend ist.

2. Futter nach Anspruch 1, dadurch gekennzeichnet, daß der zwischen dem Ring (12) aus hartem Material und dem Körper (2) angeordnetete Ring (13) aus einem 6-6-Polyamid besteht.

3. Futter nach einem der Ansprüche 1 und 2, dadurch gekennzeichnet, daß der Körper (2) eine Umfangsvertiefung (14) aufweist, die jeweils zur Aufnahme der Reihe kleiner Kugeln (10), des Rings (12) aus einem harten Material und des Rings (13) aus synthetischem Material dient, wobei diese Vertiefung nach außen offen ist und die in ihr sitzenden Elemente in ihr von einem Mantel (15) gehalten werden, der den Körper umgibt und an ihm feststehend ist.

4. Futter nach einem der Ansprüche 1 bis 3, dadurch gekennzeichnet, daß die Ganghöhe der Mutter (8) und der Spannbacken (6) etwa 1 bis 1,50 ist.

5. Futter nach einem der Ansprüche 1 bis 4, dadurch gekennzeichnet, daß ein Ring (16) aus einem harten Material, wie z.B. aus Stahl, zwischen den kleinen Kugeln (10) und der Mutter (8) angeordnet ist.

6. Futter nach einem der Ansprüche 1 bis 5, dadurch gekennzeichnet, daß es eine axial ausgerichtete und im Kontakt mit den kleinen Kugeln (10) angeordnetete Hülle (17) aufweist, die sich auf der radial innen liegenden Seite des Körpers befindet.
